# EUROPEAN PATENT APPLICATION

(11) **EP 3 671 350 A1**
(43) Date of publication of application: **24.06.2020**
(21) Application number: 19211880.0
(22) Date of filing: 27.11.2019
(51) Int. Cl.: G03G 15/00

(54) **IMAGE PROCESSING SYSTEM, IMAGE FORMING APPARATUS, VOICE INPUT INHIBITION DETERMINATION METHOD, AND PROGRAM**

(30) Priority: 17.12.2018 JP 2018235296
(71) Applicant: KONICA MINOLTA, INC., Tokyo 100-7015 (JP)
(72) Inventor: SHUTA, Saito, Tokyo, 100-7015 (JP)
(74) Representative: Henkel & Partner mbB

(57) **Abstract**

It is inhibited to execute processing unintended by an operator based on an erroneous recognition when an utterance of others around the operator is erroneously recognized as a voice command.

An image processing system (100) according to an aspect of the present invention includes: an operation input part to which manual operation by an operator is inputted; a voice input part (2) that inputs voice, and converts the inputted voice into voice data to output; a voice recognition part (300) that outputs a recognition result obtained by performing voice recognition processing on the voice data inputted from the voice input part (2); a control part that executes processing associated in advance with the recognition result inputted from the voice recognition part (300); and a voice input inhibition determination part that disables voice inputted to the voice input part (2) when it is determined that the manual operation is being performed.

## Description

### Background

### Technological Field

The present invention relates to an image processing system, an image forming apparatus, a voice input inhibition determination method, and a program.

### Description of the Related art

Conventionally, there exists an image processing system that enables an operation by voice input to a multifunction peripheral (image forming apparatus) having a copy function, a printer function, and the like.

JP 2007-114297 A discloses a technique for allowing a user to call a function by speech utterance, by enabling a user to freely set a name that will be a speech recognition target vocabulary for functions such as copy mode, in an image forming apparatus having a speech recognition function. Further, JP 2007-79852 A discloses a technique for suppressing leakage of confidential information such as password, by switching the operation mode to manual operation when voice input registered in a voice input-inhibited information list is made, in an apparatus that can be inputted with operation instructions by voice.

Meanwhile, in an image forming apparatus used in an image processing system that can be operated by voice input, an operation input to a conventional operation panel is also performed. That is, in such a system, there are two types of operation systems, that is, manual operation by operating the operation panel and voice operation by inputting voice to a voice input device.

In the situation where there are two operation systems, manual operation and voice operation, it is not desirable to execute processing based on voice input when an operation is being inputted to the operation panel. However, for example, when another person around the image forming apparatus utters voice, the voice input device may react to the voice, and the voice input device may erroneously recognize another person's utterance voice as a voice command. In this case, processing corresponding to the result of the voice input device recognizing the other person's utterance voice is to be executed in the image forming apparatus. Depending on the situation, problems may occur such as a job being executed with settings not intended by an operator, or data being transmitted to unintended destinations. Neither JP 2007-114297 A nor JP 2007-79852 A discloses a technique for inhibiting occurrence of such a situation.

### Summary

The present invention has been made in view of such a situation. An object of the present invention is to inhibit execution of processing unintended by an operator based on utterances of others in the vicinity, during manual operation by the operator.

To achieve the abovementioned object, according to an aspect of the present invention, an image processing system reflecting one aspect of the present invention comprises an operation input part to which manual operation by an operator is inputted; a voice input part that inputs voice, and converts the inputted voice into voice data to output; a voice recognition part that performs voice recognition processing on the voice data inputted from the voice input part, and outputs a recognition result; a control part that executes processing associated in advance with the recognition result inputted from the voice recognition part; and a voice input inhibition determination part that determines whether or not the operator is performing manual operation, and disables voice inputted to the voice input part when it is determined that the manual operation is being performed.

### Brief Description of the Drawings

The objects, configurations, and effects other than those described above, advantages, and features provided by one or more embodiments of the invention will become more fully understood from the detailed description given hereinbelow and the appended drawings which are given by way of illustration only, and thus are not intended as a definition of the limits of the present invention:
Fig. 1 is a schematic configuration diagram of an image processing system according to an embodiment of the present invention;
Fig. 2 is a block diagram showing a configuration example of a control system of an image forming apparatus according to an embodiment of the present invention;
Fig. 3 is a block diagram showing a configuration example of a control system of a voice input device according to an embodiment of the present invention;
Fig. 4 is a view showing an example of a job-execution-related screen according to an embodiment of the present invention;
Fig. 5 is a view showing a configuration example of a second exception command list according to an embodiment of the present invention;
Fig. 6 is a view showing an example of a user setting menu screen according to an embodiment of the present invention;
Fig. 7 is a view showing a configuration example of a third exception command list according to an embodiment of the present invention;
Fig. 8 is a flowchart showing a procedure of voice input inhibition determination processing by a voice input inhibition determination part according to an embodiment of the present invention; and
Fig. 9 is a flowchart showing a procedure of manual operation determination processing performed in the voice input inhibition determination processing by the voice input inhibition determination part according to an embodiment of the present invention.

### Detailed Description of Embodiments

Hereinafter, one or more embodiments of the present invention will be described with reference to the drawings. However, the scope of the invention is not limited to the disclosed embodiments. In this specification and the drawings, constituents having substantially the same function or configuration are denoted by the same reference numerals, and redundant explanations of the constituents are omitted.

### <Configuration of image processing system>

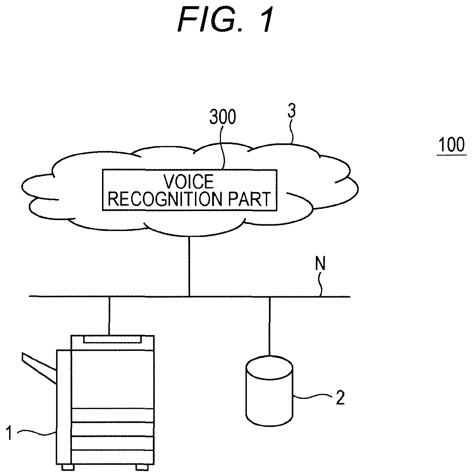

First, a configuration of an image processing system according to an embodiment of the present invention will be described with reference to Fig. 1. Fig. 1 is a schematic configuration diagram of an image processing system 100 according to an embodiment of the present invention.

The image processing system 100 shown in Fig. 1 includes an image forming apparatus 1, a voice input device 2 (an example of a voice input part), and a voice recognition part 300 provided on a cloud 3. The image forming apparatus 1 and the voice input device 2 are connected via a network N. Between the image forming apparatus 1 and the voice recognition part 300, and between the voice input device 2 and the voice recognition part 300 are individually connected via a public line and the like (not shown) connected to the network N.

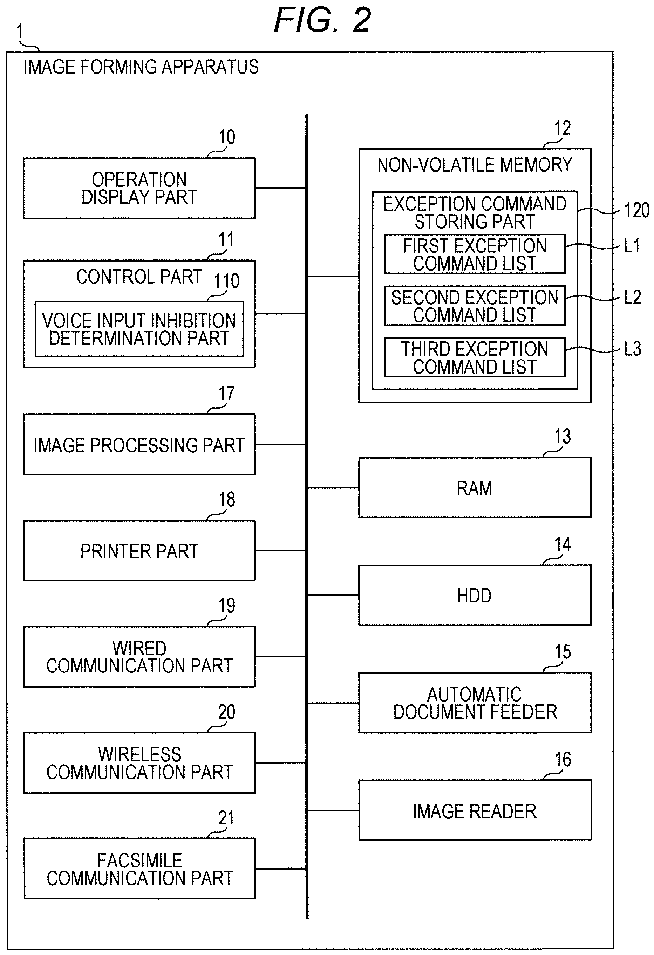

The image forming apparatus 1 is formed by, for example, multi-function peripherals (MFP) having a copy function, a printer function, a scanner function, and the like. The image forming apparatus 1 performs image formation on a sheet (an example of a recording material) on the basis of image data transmitted from a printer controller (not shown) and the like, and outputs a sheet formed with the image as printed matter. The image forming apparatus 1 according to the present embodiment has two operation systems, that is, manual operation on an operation display part 10 (see Fig. 2) and voice operation by inputting voice to the voice input device 2.

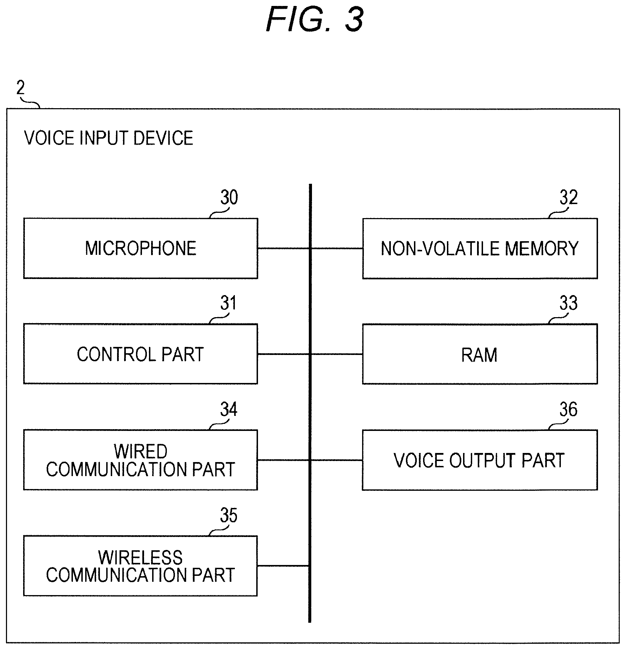

The voice input device 2 includes a microphone 30 (see Fig. 3), converts voice collected by the microphone 30, for example, voice commands uttered by an operator (user), into voice data, and transmits (outputs) the voice data obtained by the conversion to the voice recognition part 300 on the cloud 3.

The voice recognition part 300 performs voice recognition processing on the voice data transmitted (inputted) from the voice input device 2. Further, the voice recognition part 300 generates a command (an example of a recognition result) for the image forming apparatus 1 corresponding to recognition voice obtained by the voice recognition processing, and transmits the command to the image forming apparatus 1.

Note that, in the present embodiment, an example is described in which the voice recognition part 300 on the cloud 3 generates a command corresponding to recognition voice of voice data, but the present invention is not limited to this. The voice recognition part 300 may transmit text alone (an example of a recognition result) indicating contents of the recognition voice to the image forming apparatus 1, and the generation of the command corresponding to the text may be performed on the image forming apparatus 1 side.

Further, in the present embodiment, an example is described in which the voice recognition part 300 is provided on the cloud 3, but the present invention is not limited to this. The voice recognition part 300 may be provided in the image forming apparatus 1 or in an on-premises server (not shown).

### <Configuration of control systems of image forming apparatus and voice input device forming image processing system>

Next, a description is given to a configuration example of control systems of the image forming apparatus 1 and the voice input device 2 forming the image processing system 100, with reference to Figs. 2 and 3. Fig. 2 is a block diagram showing a configuration example of a control system of the image forming apparatus 1, and Fig. 3 is a block diagram showing a configuration example of a control system of the voice input device 2.

### [Configuration of control system of image forming apparatus]

First, a configuration of the control system of the image forming apparatus 1 will be described with reference to Fig. 2. As shown in Fig. 2, the image forming apparatus 1 includes the operation display part 10, a control part 11, a non-volatile memory 12, a random access memory (RAM) 13, and a hard disk drive (HDD) 14. Further, the image forming apparatus 1 includes an automatic document feeder 15, an image reader 16, an image processing part 17, a printer part 18 (an example of an image forming part), a wired communication part 19, a wireless communication part 20, and a facsimile communication part 21.

The operation display part 10 is, for example, formed by an operation panel and the like in which a display panel (an example of a display part) made by a liquid crystal display (LCD), an organic electroluminescence (EL), or the like is integrally formed with an operation input part made by a touch sensor or the like. A screen of the operation display part 10 displays, for example, information corresponding to contents of manual operation on the operation display part 10, or information corresponding to contents of voice operation by inputting voice to the voice input device 2 (see Fig. 1). Further, to the operation input part of the operation display part 10, manual operation by the operator is inputted. Then, the operation display part 10 generates an operation signal corresponding to the contents of the operation inputted by the operator, and supplies the operation signal to the control part 11. The operation signal includes, for example, information and the like on a type and a hierarchy of a screen (hereinafter also referred to as "active screen") being displayed on the display panel of the operation display part 10.

Note that, in the present embodiment, an example is described in which the operation input part and the display part are integrally formed as the operation display part 10, but the present invention is not limited to this. A display part including a display panel may be formed separately from an operation input part including a keyboard, a mouse, and the like. Alternatively, in addition to the operation display part 10 in which the operation input part and the display part are integrally formed, an operation input part including a keyboard, a mouse, and the like may be further provided.

The control part 11 includes, for example, a central processing unit (CPU) and the like, and controls an operation of each part included in the image forming apparatus 1. Specifically, the control part 11 performs control for causing each part included in the image forming apparatus 1 to execute various kinds of processing including an image forming processing, which are associated in advance with commands inputted from the voice recognition part 300 on the cloud 3.

Further, the control part 11 is provided with a voice input inhibition determination part 110. The voice input inhibition determination part 110 performs voice input inhibition determination processing. Specifically, the voice input inhibition determination part 110 determines whether or not the operator is performing manual operation, and disables voice inputted to the voice input device 2 (hereinafter also referred to as "voice input") when it is determined that manual operation is being performed. The disabling of the voice inputted from the voice input device 2 can be realized by the following method, for example.
- The control part 11 is not allowed to execute various controls based on a recognition result transmitted from the voice recognition part 300 (such as text representing contents of the recognition voice or a command corresponding to the text).
- The recognition result by the voice recognition part 300 is not to be transmitted from the voice recognition part 300 to the image forming apparatus 1.
- The voice recognition part 300 is not allowed to perform recognition of voice data inputted from the voice input device 2.
- Voice data is not to be transmitted from the voice input device 2 to the voice recognition part 300.

The voice input inhibition determination part 110 determines whether or not the operator is performing manual operation, by determining whether or not a segment in which the voice input has been performed is a voice input inhibition segment. When it is determined that the segment in which the voice input has been performed is a voice input inhibition segment, the voice input inhibition determination part 110 determines that the operator is performing manual operation. The determination as to whether or not the segment in which the voice input has been performed is a voice input inhibition segment is performed on the basis of information (hereinafter also referred to as "active screen information") regarding the active screen (the screen being displayed on the operation display part 10). The active screen information includes, for example: information on a type of screen being displayed on the active screen; information on the number of operations per predetermined time of operations inputted from the operator to the operation display part 10 for the display contents of the active screen; or information on a hierarchy of the screen being displayed on the active screen.

Specifically, when the active screen is a screen (hereinafter referred to as a "job-execution-related screen") that accepts an operation related to execution of a job inputted to the image processing system 100, the voice input inhibition determination part 110 determines that the segment in which voice input has been performed is a voice input inhibition segment.

In addition, when an operation amount per predetermined time of operations inputted from the operator to the operation display part 10 for the contents displayed on the active screen exceeds a predetermined prescribed operation amount threshold, the voice input inhibition determination part 110 determines that the segment in which voice input has been performed is a voice input inhibition segment. Furthermore, when the hierarchy of the active screen exceeds a predetermined prescribed hierarchy number threshold, the voice input inhibition determination part 110 determines that the segment in which voice input has been performed is a voice input inhibition segment.

Further, even in a case where it is determined that the operator is performing manual operation, the voice input inhibition determination part 110 enables voice input when a first exception command is inputted (uttered) by the operator. The first exception command is an activation command called "wake word" that instructs the start of an operation by voice input (enabling of voice input). The wake word as the first exception command includes, for example, a voice command such as "Enable voice input". The first exception command is managed by a first exception command list L1, which is a table that defines the first exception command.

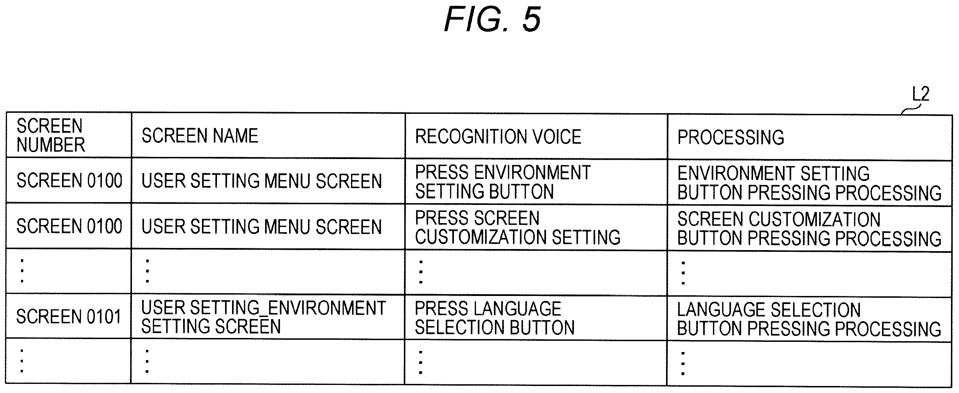

Further, even in a case where it is determined that the operator is performing manual operation, when a second exception command is inputted in a state where a screen associated with the second exception command is displayed on the active screen, the voice input inhibition determination part 110 performs control to cause processing set for the second exception command to be executed by a part in charge of the processing. The second exception command is a command related to an operation of the active screen, and is set for each type of the screen to be displayed on the operation display part 10. The second exception command is managed by a second exception command list L2, which is a table that defines the second exception command. The second exception command list L2 will be described in detail with reference to Fig. 5.

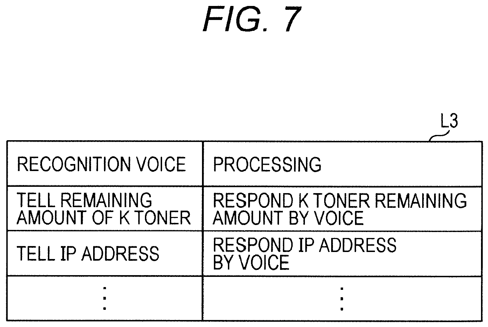

Furthermore, even in a case where it is determined that the operator is performing manual operation, when a third exception command is inputted, the voice input inhibition determination part 110 performs control to cause processing corresponding to the inputted third exception command to be executed by a part in charge of the processing. The third exception command is a status response command that inquires a state of the image processing system 100. Examples of the status response command include a command for inquiring a remaining amount of toner of a predetermined color used by the image forming apparatus 1, and a command for inquiring an IP address that has been set in the image forming apparatus 1. The third exception command is managed by a third exception command list L3, which is a table that defines the third exception command. The third exception command list L3 will be described in detail with reference to Fig. 7.

Further, the non-volatile memory 12 is a storage part that stores various data such as a program executed by the control part 11. The non-volatile memory 12 is provided with an exception command storing part 120. The exception command storing part 120 stores the first exception command list L1, the second exception command list L2, the third exception command list L3, and the like. The non-volatile memory 12 also stores an operation amount threshold, a hierarchy number threshold, and the like that are used when the voice input inhibition determination part 110 determines whether or not a segment in which voice input has been performed is a voice input inhibition segment.

Note that, in the present embodiment, an example is described in which the exception command storing part 120 and various thresholds are provided in the non-volatile memory 12, but the present invention is not limited to this. The exception command storing part 120 and various thresholds may be provided in the HDD 14.

The RAM 13 is used as a work area when the control part 11 executes a program. The HDD 14 stores image data transmitted from a printer controller (not shown), image data with which an image has been already formed by the printer part 18, and the like.

The automatic document feeder 15 automatically feeds documents placed on a document tray (not shown) one by one to a scanner part (not shown). The image reader 16 performs various kinds of processing such as analog signal processing, A/D conversion processing, and shading processing on analog image signals inputted from the scanner part (not shown), and outputs digital image data subjected to various kinds of signal processing to the image processing part 17.

The image processing part 17 performs various kinds of image processing on digital image data generated by the image reader 16 and on image data transmitted from a printer controller (not shown).

The printer part 18 forms an image on a sheet on the basis of image data subjected to the image processing by the image processing part 17, and outputs the sheet formed with the image as printed matter. Specifically, the printer part 18 includes a charging device (not shown), a photosensitive drum, an exposure device, a transfer belt, and a fixing device. First, the printer part 18 forms an electrostatic latent image on a circumference of the photosensitive drum by irradiating the photosensitive drum charged by the charging device with light corresponding to an image from the exposure device. Next, the printer part 18 causes toner to adhere to the charged electrostatic latent image to develop the toner image, by supplying toner from a developing device to a photoreceptor. Then, the printer part 18 primarily transfers the toner image to the transfer belt, secondary transfers the toner image transferred to the transfer belt to the sheet, and causes a fixing device to fix, on the sheet, the toner image transferred onto the sheet.

Here, an example has been described in which the printer part 18 forms an image by using an electrophotographic method, but the present invention is not limited to this. In the image processing system and the image forming apparatus of the present invention, there may be used a printer part that forms an image by another method such as an ink jet method.

The wired communication part 19 includes, for example, a network interface card (NIC), a modem, and the like, and is connected to the network N. The wired communication part 19 receives image data and the like transmitted from a printer controller (not shown) connected via the network N. Further, the wired communication part 19 controls various data transmission/reception operations performed between with the voice recognition part 300 on the cloud 3 connected via the network N. Further, the wired communication part 19 controls various data transmission/reception operations performed between with the voice input device 2 connected via the network N.

The wireless communication part 20 controls various data transmission/reception operations performed between with various devices and terminals (not shown) connected via wireless communication. Note that, the wireless communication part 20 may perform control of various data transmission/reception operations performed between with the voice recognition part 300 and/or control of various data transmission/reception operations performed between with the voice input device 2 that are performed by the wired communication part 19.

The facsimile communication part 21 is connected to a public switched telephone network or an IP communication network (not shown), and controls various data transmission/reception operations performed between with a device (not shown) having a facsimile function connected through these lines.

### [Configuration of control system of voice input device]

Next, a configuration of a control system of the voice input device 2 will be described with reference to Fig. 3. As shown in Fig. 3, the voice input device 2 includes the microphone 30, a control part 31, a non-volatile memory 32, a RAM 33, a wired communication part 34, a wireless communication part 35, and a voice output part 36.

The microphone 30 collects surrounding voice and converts the collected voice into voice data. The surrounding voice collected by the microphone 30 includes, for example, a voice command uttered by the operator, voice spoken by another person existing around the operator, and the like. The voice data converted by the microphone 30 is transmitted (outputted) to the voice recognition part 300 (see Fig. 2) on the cloud 3 via the wireless communication part 35.

The control part 31 includes, for example, a CPU and the like, and controls an operation of each part included in the voice input device 2. For example, the control part 31 performs control to transmit voice data obtained by the microphone 30, to the voice recognition part 300 on the cloud 3 via the wireless communication part 35. In addition, the control part 31 performs control to emit, from the voice output part 36, a response (voice data) to a status response command transmitted from the image forming apparatus 1 connected via the network N, for example.

The non-volatile memory 32 is a storage part that stores various data such as a program executed by the control part 31. The RAM 33 is used as a work area when the control part 31 executes a program.

The wired communication part 34 includes, for example, a NIC and the like, and is connected to the network N. The wired communication part 34 receives, for example, a response to a status response command transmitted from the image forming apparatus 1 connected via the network N.

The wireless communication part 35 is connected to a public line (not shown) and the like, and controls various data transmission/reception operations performed between with the voice recognition part 300 on the cloud 3 connected via the public line. Note that the wired communication part 34 may control various data transmission/reception operations performed by the wireless communication part 35 between with the voice recognition part 300.

The voice output part 36 is formed by a speaker, for example, and converts voice data inputted from the control part 31 into audio and emits the sound to the outside.

### [Example of job-execution-related screen]

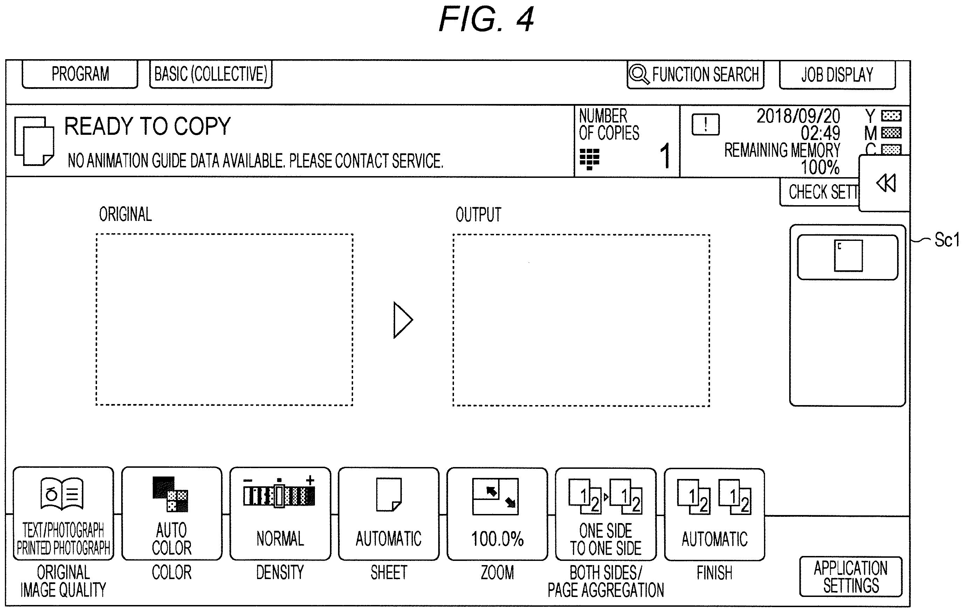

Next, with reference to Fig. 4, a description is given to an example of a job-execution-related screen, which is one of determination materials when the voice input inhibition determination part 110 of the image forming apparatus 1 performs the voice input inhibition determination processing. Fig. 4 is a view showing an example of the job-execution-related screen.

The job-execution-related screen is a screen to accept operations related to execution of a job inputted to the image processing system 100, and includes, for example, a print setting screen, a copy screen, a fax screen, a scan screen, and the like. Fig. 4 shows a copy screen as an example of the job-execution-related screen.

Below a copy screen Sc1 shown in Fig. 4, there are displayed respective icons for setting individual setting items of "Original Image Quality", "Color", "Density", "Sheet", "Zoom", "Both sides/Page Aggregation", and "Finish", which are setting items related to the copy function, in a row in a horizontal direction. When the active screen is a job-execution-related screen such as the copy screen Sc1 shown in Fig. 4, the voice input inhibition determination part 110 determines that the segment in which voice input has been performed is a voice input inhibition segment.

### [Example of second exception command list]

Next, with reference to Fig. 5, a description is given to a configuration example of the second exception command list L2, which is referred to when the voice input inhibition determination part 110 performs the voice input inhibition determination processing. Fig. 5 is a view showing a configuration example of the second exception command list L2. As shown in Fig. 5, the second exception command list L2 includes individual items of "Screen number", "Screen name", "Recognition voice", and "Processing".

The item "Screen number" stores a screen number as an identification number assigned to each screen to be displayed on the operation display part 10. The item "Screen name" stores a name of each screen to be displayed on the operation display part 10. The item "Recognition voice" stores text indicating contents of the second exception command. The item of "Processing" stores contents of processing to be executed when the second exception command is inputted by an operator.

Then, in the second exception command list L2, a screen identified by a screen number (screen name), a second exception command stored in "Recognition voice", and processing stored in "Processing" are managed in association with each other. For example, in the first line of the second exception command list L2, a screen having a screen number "screen 0100" and a screen name "User setting menu screen", a second exception command of "Press environment setting button", and processing contents of "Environment setting button pressing processing" are managed in association with each other. In the second line of the second exception command list L2, a screen having the screen number "screen 0100" and the screen name "User setting menu screen", a second exception command of "Press screen customization setting", and processing contents of "Screen customization button pressing processing" are managed in association with each other.

For example, assuming that a voice command "Press environment setting button" is uttered (inputted to the voice input device 2) by the operator in a situation where a screen having the screen number "Screen 0100" and the screen name "User setting menu screen" is the active screen. In this case, even in a case where it has been previously determined that manual operation is being performed (voice input has been disabled), the voice input inhibition determination part 110 performs control to cause the control part 11 to execute "Environment setting button pressing processing" associated with "Press environment setting button", which is the second exception command.

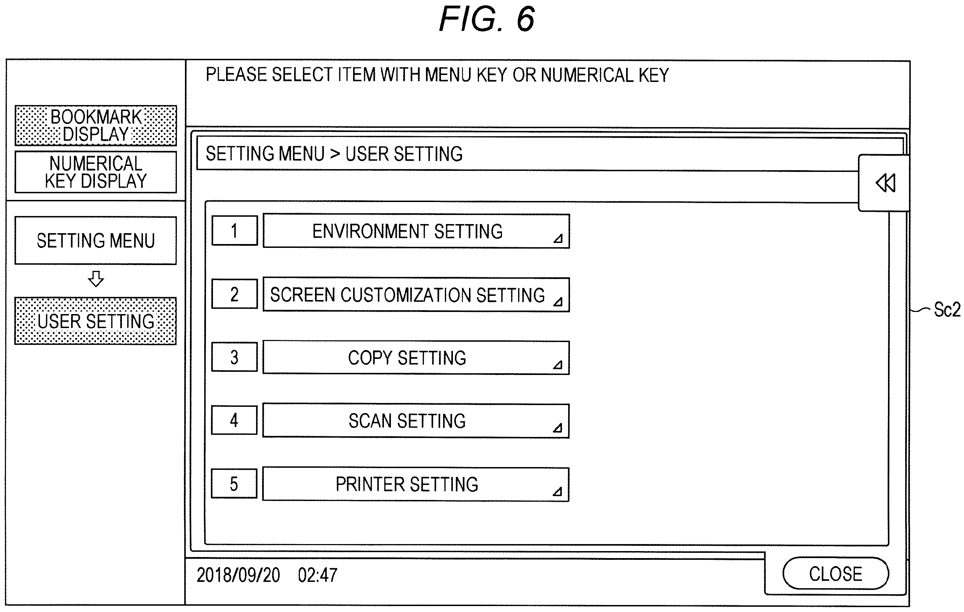

Fig. 6 is a view showing an example of a user setting menu screen Sc2 having the screen number "screen 0100". On the left side of the user setting menu screen Sc2 shown in Fig. 6, there are displayed respective buttons of "Bookmark display", "Numerical key display", and "Setting menu" indicating items of the user setting menu, in a line in a vertical direction. Further, it is shown that the item "User setting" is selected in the item "Setting menu".

On the right side of the menu item display position on the user setting menu screen Sc2 shown in Fig. 6, there are displayed respective buttons of "1 Environment setting", "2 Screen customization setting", "3 Copy setting", "4 Scan setting" and "5 Printer setting" as icons indicating the respective setting items of "User setting", in a line in the vertical direction.

Assuming that, in a situation where the user setting menu screen Sc2 shown in Fig. 6 is displayed on the operation display part 10 (is the active screen), a voice command "Press environment setting button" is inputted to the voice input device 2 by an operator. In this case, the voice input inhibition determination part 110 performs control to cause the control part 11 to press the "Environment setting" button on the user setting menu screen, on the basis of the contents described in the second exception command list L2. By the voice input inhibition determination part 110 performing the control as described above, the operator can operate the active screen by uttering the second exception command related to the operation of the active screen, even in a situation where the voice input is disabled.

### [Example of third exception command list]

Next, with reference to Fig. 7, a description is given to a configuration example of the third exception command list L3, which is referred to when the voice input inhibition determination part 110 performs the voice input inhibition determination processing. Fig. 7 is a view showing a configuration example of the third exception command list L3.

As shown in Fig. 7, the third exception command list L3 includes items of "Recognition voice" and "Processing". The item "Recognition voice" stores text indicating contents of the third exception command. The item of "Processing" stores contents of processing to be executed when the third exception command is inputted by an operator. Then, in the third exception command list L3, "Recognition voice" and "Processing" are managed in association with each other.

In the first line of the third exception command list L3, the third exception command "Tell remaining amount of K toner" and processing contents of "Respond K toner remaining amount by voice" are managed in association with each other. Further, in the second line of the third exception command list L3, the third exception command "Tell IP address" and processing contents "Respond IP address by voice" are managed in association with each other.

For example, when a voice command "Tell remaining amount of toner K" is inputted to the voice input device 2 by the operator, the voice input inhibition determination part 110 performs control to respond the remaining amount of K (black) toner by voice from the voice output part 36 (see Fig. 3) of the voice input device 2. Further, for example, when a voice command "Tell IP address" is inputted to the voice input device 2 by the operator, the voice input inhibition determination part 110 performs control to respond the IP address of the image forming apparatus 1 by voice from the voice output part 36 of the voice input device 2.

By performing such control by the voice input inhibition determination part 110, the operator can easily grasp a state (status) of the image processing system 100 by uttering a second exception command, which is also a status response command such as "Tell IP address", even in a situation where voice input is disabled.

### [Voice input inhibition determination processing by voice input inhibition determination part]

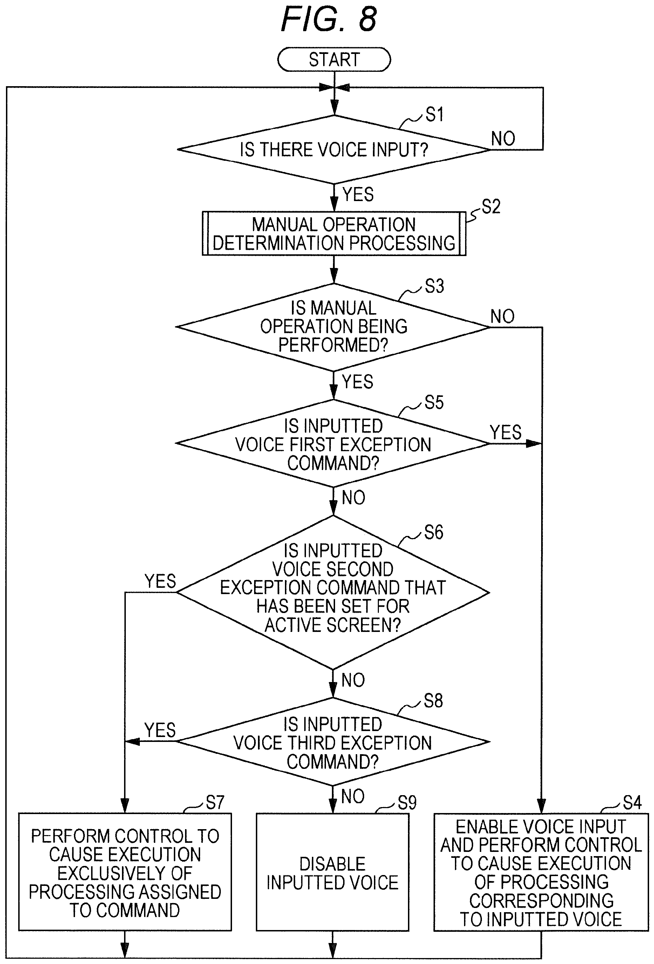

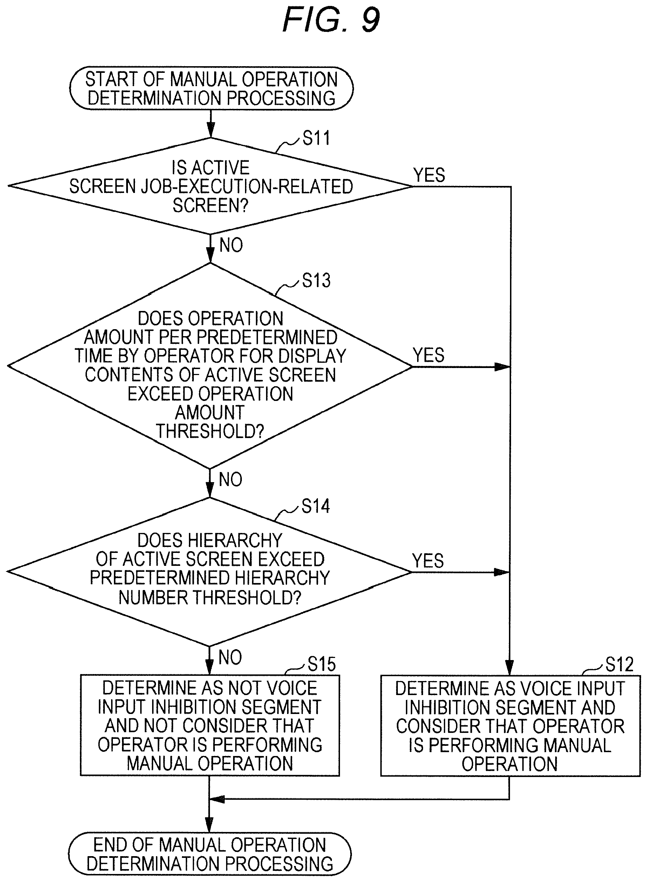

Next, with reference to Figs. 8 and 9, a description is given to a procedure of the voice input inhibition determination processing by the voice input inhibition determination part 110. Fig. 8 is a flowchart showing a procedure of the voice input inhibition determination processing by the voice input inhibition determination part 110. Fig. 9 is a flowchart showing a procedure of manual operation determination processing executed in the voice input inhibition determination processing by the voice input inhibition determination part 110.

First, the voice input inhibition determination part 110 determines whether or not voice is inputted to the voice input device 2 by an operator (step S1). In the present embodiment, when voice is inputted to the voice input device 2 by the operator, the voice is converted into voice data by the voice input device 2, and the voice data is inputted to the voice recognition part 300 on the cloud 3. Then, a command corresponding to recognition voice by the voice recognition part 300 is inputted to the image forming apparatus 1. Therefore, by determining whether or not the command is inputted from the voice recognition part 300, the voice input inhibition determination part 110 can determine whether or not voice is inputted by the operator.

When it is determined in step S1 that there is no voice input by the operator (step S1 is NO), the voice input inhibition determination part 110 repeats the determination in step S1. Whereas, when it is determined in step S1 that there is a voice input by the operator (step S1 is YES), the voice input inhibition determination part 110 performs the manual operation determination processing (step S2). A procedure of the manual operation determination processing will be described in detail with reference to Fig. 9. By performing the manual operation determination processing in step S2 by the voice input inhibition determination part 110, it is determined whether or not the operator is performing manual operation.

Next, the voice input inhibition determination part 110 determines whether or not manual operation is being performed (step S3). That is, the voice input inhibition determination part 110 determines whether or not the determination obtained as a result of the manual operation determination processing in step S2 is "manual operation is being performed".

When it is determined in step S3 that manual operation is not being performed (step S3 is NO), the voice input inhibition determination part 110 enables the voice input and performs control to cause processing corresponding to the voice inputted in step S1 to be executed by a part in charge of the processing (step S4). After the processing of step S4, the voice input inhibition determination part 110 performs the determination of step S1.

Whereas, when it is determined in step S3 that the manual operation is being performed (step S3 is YES), the voice input inhibition determination part 110 determines whether or not the voice inputted in step S1 is a first exception command (step S5). That is, the voice input inhibition determination part 110 determines whether or not the voice inputted in step S1 is a wake word such as "Enable voice input".

When it is determined in step S5 that the inputted voice is the first exception command (step S5 is YES), the voice input inhibition determination part 110 performs the processing of step S4. That is, the voice input inhibition determination part 110 enables the voice input and performs control to cause processing corresponding to the voice inputted in step S1 to be executed by a part in charge of the processing.

Whereas, when it is determined in step S5 that the inputted voice is not the first exception command (step S5 is NO), the voice input inhibition determination part 110 determines whether or not the voice inputted in step S1 is the second exception command that has been set for the active screen (step S6). That is, the voice input inhibition determination part 110 determines whether or not the voice inputted in step S1 is the second exception command associated with the active screen in the second exception command list L2 (see Fig. 5).

When it is determined in step S6 that the inputted voice is the second exception command that has been set for the active screen (step S6 is YES), the voice input inhibition determination part 110 performs control to cause processing assigned to the command (second exception command) to be exclusively executed by a part in charge of the processing (step S7). For example, in a case where the active screen is the user setting menu screen Sc2 shown in Fig. 6 and the voice inputted in step S1 is voice "Press environment setting button", the voice input inhibition determination part 110 performs control to cause the control part 11 to press the "Environment setting" button on the user setting menu screen. After the processing of step S7, the voice input inhibition determination part 110 performs the determination of step S1.

Whereas, when it is determined in step S6 that the voice inputted in step S1 is not the second exception command that has been set for the active screen (step S6 is NO), the voice input inhibition determination part 110 determines whether or not the voice inputted in step S1 is the third exception command (step S8). That is, the voice input inhibition determination part 110 determines whether or not the voice inputted in step S1 is a status response command such as "Tell IP address".

When it is determined in step S8 that the inputted voice is the third exception command (step S8 is YES), the voice input inhibition determination part 110 performs the processing of step S7. That is, the voice input inhibition determination part 110 performs control to cause processing assigned to the command (third exception command) to be exclusively executed by a part in charge of the processing.

Whereas, when it is determined in step S8 that the voice inputted in step S1 is not the third exception command (step S8 is NO), the voice input inhibition determination part 110 disables the voice inputted in step S1 (step S9). After the processing of step S9, the voice input inhibition determination part 110 performs the determination of step S1.

Next, a procedure of the manual operation determination processing performed in step S2 in Fig. 8 will be described with reference to Fig. 9.

First, the voice input inhibition determination part 110 determines whether or not the active screen is a job-execution-related screen (step S11). That is, the voice input inhibition determination part 110 determines whether or not a screen displayed on the operation display part 10 when voice is inputted in step S1 of Fig. 8 is a job-execution-related screen such as a print setting screen or a copy screen. When it is determined in step S11 that the active screen is the job-execution-related screen (step S11 is YES), the voice input inhibition determination part 110 determines that the segment in which the voice input has been performed is a voice input inhibition segment, and considers that the operator is performing manual operation (step S12). After the processing of step S12, the voice input inhibition determination part 1 10 ends the manual operation determination processing and performs the determination of step S3 in Fig. 8.

When it is determined in step S11 that the active screen is not the job-execution-related screen (step S11 is NO), the voice input inhibition determination part 110 determines whether or not an operation amount per certain time by the operator for the display contents of the active screen exceeds a predetermined operation amount threshold (step S13). The "operation amount" includes, for example, the number of times the screen of the operation display part 10 is touched, the number of times of pressing of a button on the screen or a button provided separately from the screen, and the like. For the operation amount threshold to be compared with the "operation amount per certain time", there is set a value that enables determination as to whether or not the operator is intentionally performing the operation on the screen. For example, a value such as "twice every 10 seconds" can be set as the operation amount threshold. The value of the operation amount threshold is not limited to this example, but can take other various values.

When it is determined in step S13 that an operation amount per certain time by the operator for the display contents of the active screen exceeds the operation amount threshold (step S13 is YES), the voice input inhibition determination part 110 performs the processing of step S12. That is, the voice input inhibition determination part 110 determines that the segment in which the voice input has been performed is a voice input inhibition segment, and considers that the operator is performing manual operation.

Whereas, when it is determined in step S13 that an operation amount per certain time by the operator for the display contents of the active screen does not exceed the operation amount threshold (step S13 is NO), the voice input inhibition determination part 110 determines whether or not a hierarchy of the active screen exceeds a predetermined hierarchy number threshold (step S14). For the hierarchy number threshold, it is possible to set the number of hierarchies corresponding to the number of screen transitions expected to be reached by the operator performing manual operation.

When it is determined in step S14 that the hierarchy of the active screen exceeds the hierarchy number threshold (step S14 is YES), the voice input inhibition determination part 110 performs the processing of step S12. That is, the voice input inhibition determination part 110 determines that the segment in which the voice input has been performed is a voice input inhibition segment, and considers that the operator is performing manual operation.

Whereas, when it is determined in step S14 that the hierarchy of the active screen does not exceed the hierarchy number threshold (step S14 is NO), the voice input inhibition determination part 110 determines that the segment in which the voice input has been performed is not a voice input inhibition segment, and does not consider that the operator is performing manual operation (step S15). After the processing of step S15, the voice input inhibition determination part 110 ends the manual operation determination processing and performs the determination of step S3 in Fig. 8.

Note that, in the example shown in Fig. 9, when step 14 is NO, the voice input inhibition determination part 110 performs the processing of step S15 of determining as not a voice input inhibition segment, and not considering that the operator is performing manual operation, but the present invention is not limited to this. For example, the voice input inhibition determination part 110 may end the manual operation determination processing without performing any processing when step S14 is NO. In this case, the voice input inhibition determination part 110 exclusively holds a result of the determination performed in step S12 indicating that the operator is performing manual operation.

Note that, in the example shown in Fig. 9, an example is described in which the voice input inhibition determination part 110 determines as a voice input inhibition segment and considers that the operator is performing manual operation when any of the determinations in step S11, step S13, and step S14 is YES, but the present invention is not limited to this. When the determination made in a plurality or all of step S11, step S13, and step S14 is YES, the voice input inhibition determination part 110 may determine as a voice input inhibition segment, and may consider that the operator is performing manual operation.

In the embodiment described above, when it is determined by the voice input inhibition determination part 110 that the operator is performing manual operation, input of voice data from the voice input device 2 to the voice recognition part 300 is disabled. In other words, according to the present embodiment, even if another person in the vicinity utters while manual operation is being performed by the operator, processing based on contents of the utterance is not to be executed in the image forming apparatus 1. Therefore, according to the present embodiment, it is possible to inhibit execution of processing unintended by the operator based on utterances of others in the vicinity.

Further, in the embodiment described above, the voice input inhibition determination part 110 determines whether or not a segment in which voice input has been performed is a voice input inhibition segment, on the basis of information regarding the active screen being displayed on the operation display part 10. Then, when it is determined as the voice input inhibition segment, the voice input inhibition determination part 110 determines that the operator is performing manual operation. Therefore, according to the present embodiment, it is appropriately determined whether or not manual operation is being performed by the operator, on the basis of information regarding the active screen including contents displayed on the active screen and a hierarchy.

Further, in the embodiment described above, when the active screen is a job-execution-related screen that accepts an operation related to execution of a job inputted to the image processing system 100, the voice input inhibition determination part 110 determines that the segment in which voice input has been performed is a voice input inhibition segment. Therefore, according to the present embodiment, in a case where a screen displayed on the operation display part 10 when the operator inputs voice is a job-execution-related screen such as a print setting screen, a copy screen, a fax screen, or scan screen, it is considered that the operator is performing manual operation, and the voice input is disabled. Therefore, according to the present embodiment, it is possible to inhibit problems such as a job being executed with settings not intended by the operator, or data being transmitted to unintended destinations.

Further, in the embodiment described above, when an operation amount per predetermined time of operations inputted from the operator to the operation display part 10 for the contents displayed on the active screen exceeds a predetermined prescribed operation amount threshold, the voice input inhibition determination part 110 determines that the segment in which voice input has been performed is a voice input inhibition segment. Therefore, in the present embodiment, the voice input is disabled in a situation where it can be determined that the operator is performing manual operation on the operation display part 10. Therefore, according to the present embodiment, it is possible to inhibit execution of processing unintended by the operator based on utterances of others in the vicinity while the operator is performing manual operation.

Further, in the embodiment described above, when the hierarchy of the active screen exceeds a predetermined prescribed hierarchy number threshold, the voice input inhibition determination part 110 determines that the segment in which voice input has been performed is a voice input inhibition segment. Therefore, in the present embodiment, the voice input is disabled in a situation where it can be determined that the operator is performing manual operation on the operation display part 10. Therefore, according to the present embodiment, it is possible to inhibit execution of processing unintended by the operator based on utterances of others in the vicinity while the operator is performing manual operation.

Further, in the embodiment described above, even in a case where it is determined that the operator is performing manual operation, when voice data inputted from the voice input device 2 to the voice recognition part 300 is voice data of a first exception command that instructs the start of an operation input by voice, the voice input inhibition determination part 110 enables the voice inputted to the voice input device 2. In other words, in the present embodiment, when the operator inputs a wake word as the first exception command, the voice input is enabled. Therefore, according to the present embodiment, the operator can always perform the voice operation in a situation where the operator desires to intentionally enable the voice input.

Further, in the embodiment described above, even in a case where it is determined that the operator is performing manual operation, when voice data inputted from the voice input device 2 to the voice recognition part 300 is voice data of a second exception command related to an operation of the active screen, the voice input inhibition determination part 110 enables the voice inputted to the voice input device 2. Therefore, in the present embodiment, when a second exceptional command such as "Press button displayed on active screen" is inputted, the voice input is enabled and the operator can perform voice operation. Therefore, according to the present embodiment, the operator can perform the voice operation in a case where work by the manual operation can be simplified by the voice operation.

Further, in the embodiment described above, even in a case where it is determined that the operator is performing manual operation, when voice data inputted from the voice input device 2 to the voice recognition part 300 is voice data of a third exception command that inquires a state of the image processing system 100, the voice input inhibition determination part 110 enables the voice inputted to the voice input device 2. Therefore, in the present embodiment, the operator can perform voice operation in a case where manual operation by the operator is not hindered, such as a case of inquiring a state of the image processing system 100.

### <Various modifications>

In addition, the present invention is not limited to the embodiment described above, and it is needless to say that various other application examples and modifications can be taken without departing from the gist of the present invention described in the claims.

In the embodiment described above, an example has been described in which the voice input inhibition determination part 110 is provided in the image forming apparatus 1, but the present invention is not limited to this. By providing the voice input inhibition determination part 110 on the cloud 3, the voice input inhibition determination processing may be executed on the cloud 3 side. In this case, the voice input inhibition determination part 110 provided on the cloud 3 acquires a status (such as active screen information) of the image forming apparatus 1, and performs the voice input inhibition determination processing on the basis of the acquired contents. Then, exclusively when it is determined that manual operation is not being performed, the voice input inhibition determination part 110 provided on the cloud 3 generates a command corresponding to recognition voice subjected to voice recognition, and transmits the command to the image forming apparatus 1.

Alternatively, the manual operation determination processing (see Fig. 9) in the voice input inhibition determination processing executed by the voice input inhibition determination part 110 may be exclusively executed by the voice input inhibition determination part 110 provided on the cloud 3.

Further, in the embodiment described above, an example has been described in which the voice output part 36 (see Fig. 3) of the voice input device 2 responds to a status response command, but the present invention is not limited to this. The response to the status response command may be emitted from a speaker (not shown) provided in the image forming apparatus 1.

Although embodiments of the present invention have been described and illustrated in detail, the disclosed embodiments are made for purposes of illustration and example only and not limitation. The scope of the present invention should be interpreted by terms of the appended claims.

## Claims

1. An image processing system (100) comprising:
an operation input part (10) to which manual operation by an operator is inputted;
a voice input part (2) that inputs voice, and converts the inputted voice into voice data to output;
a voice recognition part (300) that performs voice recognition processing on the voice data inputted from the voice input part (2), and outputs a recognition result;
a control part (11) that executes processing associated in advance with the recognition result inputted from the voice recognition part (300); and
a voice input inhibition determination part (110) that determines whether or not the operator is performing manual operation, and disables voice inputted to the voice input part (2) when it is determined that the manual operation is being performed.

2. The image processing system (100) according to claim 1, further comprising
a display part (10), wherein
based on information regarding a screen displayed on the display part (10) when voice is inputted to the voice input part (2), the voice input inhibition determination part (110) determines whether or not a segment in which voice is inputted to the voice input part (2) is a voice input inhibition segment, and determines that the manual operation is being performed when it is determined as the voice input inhibition segment.

3. The image processing system (100) according to claim 2, wherein
when a screen displayed on the display part (10) when voice is inputted to the voice input part (2) is a job-execution-related screen that accepts an operation related to execution of a job inputted to the image processing system (100), the voice input inhibition determination part (110) determines that a segment in which voice is inputted to the voice input part (2) is the voice input inhibition segment.

4. The image processing system (100) according to claim 2 or 3, wherein
when an operation amount per predetermined time of an operation inputted from the operator to the operation input part (10) for a content displayed on a screen being displayed on the display part (10) exceeds a predetermined prescribed operation amount threshold, the voice input inhibition determination part (110) determines that a segment in which voice is inputted to the voice input part (2) is the voice input inhibition segment.

5. The image processing system (100) according to any one of claims 2 to 4, wherein
when a hierarchy of a screen being displayed on the display part (10) exceeds a predetermined prescribed hierarchy number threshold, the voice input inhibition determination part (110) determines that a segment in which voice is inputted to the voice input part (2) is the voice input inhibition segment.

6. The image processing system (100) according to any one of claims 2 to5, wherein
even in a case where it is determined that the manual operation is being performed, the voice input inhibition determination part (110) enables voice inputted to the voice input part (2) when voice data inputted from the voice input part (2) to the voice recognition part (300) is voice data of a first exception command that instructs a start of an operation input by voice.

7. The image processing system (100) according to any one of claims 2 to 6, wherein
even in a case where it is determined that the manual operation is being performed, the voice input inhibition determination part (110) enables voice inputted to the voice input part (2) when voice data inputted from the voice input part (2) to the voice recognition part (300) is voice data of a second exception command related to an operation of a screen being displayed on the display part (10).

8. The image processing system (100) according to any one of claims 2 to 7, wherein
even in a case where it is determined that the manual operation is being performed, the voice input inhibition determination part (110) enables voice inputted to the voice input part (2) when voice data inputted from the voice input part (2) to the voice recognition part (300) is voice data of a third exception command that inquires a state of the image processing system (100).

9. An image forming apparatus comprising:
an operation input part (10) to which manual operation by an operator is inputted;
an image forming part (18) that forms an image on a recording material;
a control part (11) that executes processing including image forming processing by the image forming part (18), the processing being associated in advance with a recognition result obtained by performing voice recognition processing by the voice recognition part (300) on voice data obtained by converting inputted voice by the voice input part (2); and
a voice input inhibition determination part (110) that determines whether or not the operator is performing manual operation, and disables voice inputted to the voice input part (2) when it is determined that the manual operation is being performed.

10. A voice input inhibition determination method comprising:
accepting an operation by an operator;
inputting voice, and converting the inputted voice into voice data to output;
performing voice recognition processing on the inputted voice data, and outputting a recognition result;
executing processing associated in advance with the inputted recognition result; and
determining whether or not the operator is performing manual operation, and disabling the inputted voice when it is determined that the manual operation is being performed.

11. A program for causing a computer to execute:
accepting an operation by an operator;
inputting voice, and converting the inputted voice into voice data to output;
performing voice recognition processing on the inputted voice data, and outputting a recognition result;
executing processing including image forming processing for forming an image on a recording material, the processing being associated in advance with the inputted recognition result; and
determining whether or not the operator is performing manual operation, and disabling the inputted voice when it is determined that the manual operation is being performed.
